# EUROPÄISCHE PATENTSCHRIFT

(11) **EP 2 934 846 B1**
(45) Veröffentlichungstag und Bekanntmachung des Hinweises auf die Patenterteilung: **08.02.2017**
(21) Anmeldenummer: 13818654.9
(22) Anmeldetag: 03.12.2013
(51) Int. Cl.: B29C 45/16, B29C 45/26, B29C 45/04

(54) **VERFAHREN ZUM HERSTELLEN EINES KUNSTSTOFF-FORMTEILS SOWIE SPRITZGIESSMASCHINE**
PROCESS FOR MANUFACTURING A PLASTIC ARTICLE AND AN INJECTION MOULDING APPARATUS
PROCÉDÉ POUR LA FABRICATION D'UNE PIECE EN MATIÈRE PLASTIQUE ET UN DISPISITIF DE MOULAGE PAR INJECTION

(30) Priorität: 21.12.2012 DE 102012025132
(43) Veröffentlichungstag der Anmeldung: 28.10.2015
(73) Patentinhaber: Ferromatik Milacron GmbH, 79364 Malterdingen (DE)
(72) Erfinder: ENGELMANN, Sven, 74584 Rot am See (DE); SAUM, Rüdiger, 79211 Denzlingen (DE); THÜMEN, Thorsten, 64625 Bensheim (DE)
(74) Vertreter: Grättinger Möhring von Poschinger Patentanwälte Partnerschaft
(86) Internationale Anmeldenummer: PCT/EP2013/003637
(87) Internationale Veröffentlichungsnummer: WO 2014/094978

(56) Entgegenhaltungen:
- EP-A1- 1 612 024
- EP-A1- 1 886 787
- WO-A1-96/07525
- WO-A1-2009/143600
- WO-A1-2010/050101
- DE-A1-102006 054 264
- DE-C1- 4 328 853
- DE-T1- 4 092 623
- US-A- 5 651 998

## Beschreibung

Die vorliegende Erfindung betrifft eine Spritzgießmaschine, die sich eignet zum Herstellen eines Kunststoff-Formteils, welches eine in den Kunststoff eingebettete Barriereschicht aufweist.

Eines der bedeutendsten Verfahren der Kunststoffverarbeitung bildet die Spritzgießtechnik. Sie umfasst unzählige Varianten der Herstellung von massiven oder hohlen Erzeugnissen aus einer Komponente oder mehreren Komponenten, mit oder ohne vorgefertigtes Einlegeteil.

Die EP 1612024 A1 offenbart ein Verfahren zur Herstellung eines Verbundbauteils, welches eine Trägerkomponente und eine Deckkomponente aus Kunststoff und eine zwischen diesen Komponenten angeordnete Armierungskomponente aufweist, in Spritzgießtechnik. Dabei werden in einer Spritzgießmaschine die Trägerkomponente und die Deckkomponente nacheinander an die Armierungskomponente angespritzt. Für die Durchführung des Verfahrens werden zwei mögliche Spritzgießmaschinen-Varianten vorgeschlagen. Bei der ersten Maschinenvariante umfasst die Spritzgießmaschine zwei relativ zueinander bewegbare Formaufspannplatten mit darauf aufgespannten Teilwerkzeugen und eine zwischen den Formaufspannplatten angeordnete Wendeeinheit mit einem um eine sich quer zur Schließachse erstreckende Drehachse drehbaren dritten Teilwerkzeug; für das Spritzen der Trägerkomponente wird eine erste Kavität, die durch das erste und das dritte Teilwerkzeug begrenzt ist, herangezogen, während die Deckkomponente in einer von dem zweiten und dem dritten Teilwerkzeug begrenzten Kavität gespritzt wird. Das im ersten Schritt gefertigte, aus der Armierungskomponente und der daran angespritzten Trägerkomponente bestehende Zwischenprodukt wird nach dem Öffnen des Werkzeugs, an dem dritten Teilwerkzeug haftend, durch dessen Drehung vor das zweite Teilwerkzeug gefördert, bevor das Werkzeug für den zweiten Schritt wieder geschlossen wird. Bei der zweiten Maschinenvariante ist zwischen den des erste und das zweite Teilwerkzeug tragenden Formaufspannplatten keine Wendeeinheit vorgesehen; vielmehr ist hier eine der beiden Formaufspannplatten um eine zur Schießachse parallele Drehachse drehbar. Die unterschiedlichen Kavitäten sind jeweils durch das erste und das zweite Teilwerkzeug begrenzt.

Eine der zweiten Maschinenvariante nach der EP 1612024 A1 entsprechende Spritzgießmaschine, welche in gleicher Weise der Herstellung eines Verbundbauteils mit einem beidseits umspritzten Einlegeteil dient, ist auch der WO 2010/050101 A1 entnehmbar.

Die WO 2009/143600 A1 offenbart eine Spritzgießmaschine, die hinsichtlich ihrer grundsätzlichen Bauweise derjenigen der ersten Maschinenvariante nach der EP 1612024 A1 entspricht.

Auf verschiedenen Anwendungsbereichen besteht ein Bedarf an Kunststoff-Formteilen mit eingebetteter Barriereschicht. Dies gilt insbesondere auf dem Sektor der Lebensmittelverpackungen und (wiederverschließbaren) Behälter, namentlich wenn es darum geht, zum Schutz von empfindlichen Lebensmitteln die Diffusion von Sauerstoff in das Innere einer Kunststoffverpackung hinein oder bei technischen Substanzen das Ausdiffundieren flüchtiger Bestandteile zu unterbinden. Zum Stand der Technik wird verwiesen beispielsweise auf die WO 2010/139566 A1.

Unter Kostengesichtspunkten besteht eine besondere Herausforderung darin, solche Kunststoff-Formteile zuverlässig und prozesssicher herstellen zu können, bei denen die in den Kunststoff eingebettete Barriereschicht eine nur minimale Dicke aufweist.

Gelöst wird diese Problemstellung gemäß der vorliegenden Erfindung durch die in Anspruch 1 angegebene Spritzgießmaschine. Im synergetischen funktionalen Zusammenwirken mit den übrigen für diese charakteristischen Merkmalen zeichnet sich die erfindungsgemäße Spritzgießmaschine somit unter anderem dadurch aus, dass drei Teilwerkzeuge vorgesehen sind, nämlich ein erstes und ein zweites jeweils einer Formaufspannplatte zugeordnetes Teilwerkzeug und ein dazwischen angeordnetes drittes Teilwerkzeug, welches um eine sich parallel zur Schließachse der Spritzgießmaschine erstreckende Drehachse drehbar ist und eine Mehrzahl von um die Drehachse herum angeordneten Hohlräumen aufweist. Bei geschlossenem Werkzeug weist dieses eine Mehrzahl von Formhohlräumen auf, welche jeweils begrenzt werden durch das erste Teilwerkzeug, das zweite Teilwerkzeug sowie die Wandung des betreffenden Hohlraums des dritten Teilwerkzeugs. Von besonderer Bedeutung ist dabei, dass die Hohlräume des dritten Teilwerkzeugs sowohl in Richtung auf das erste Teilwerkzeug als auch in Richtung auf das zweite Teilwerkzeug offen sind, so dass Spritzgießmaterial - je nach dem jeweiligen Verfahrensschritt - sowohl von der Seite des ersten Teilwerkzeugs her als auch von der Seite des zweiten Teilwerkzeugs her in den Hohlraum eingespritzt werden kann. Innerhalb der Spritzgießmaschine laufen die einzelnen Spritzgießschritte an verschiedenen Stationen ab, wobei der im ersten Spritzgießschritt hergestellte Spritzling, der im Sinne des weiter oben erläuterten Verfahrens insbesondere aus dem dreidimensionalen Vorformling mit einseitig daran angespritztem, eine Wandfläche des herzustellenden Kunststoff-Formteils definierendem Kunststoff bestehen kann, mittels des dritten Teilwerkzeugs durch dessen Drehen um die Drehachse von einer Station zur nächsten transportiert werden kann. In der zweiten Station wird dabei typischerweise Kunststoff an die zweite Seite angespritzt, so dass auch dort eine die fertige Wandfläche des herzustellenden Kunststoff-Formteils definierende Struktur erzeugt wird.

Unter Anwendung der dargelegten Spritzgießmaschine lässt sich das weiter unten beschriebene Verfahren zum Herstellen eines Kunststoff-Formteils, welches eine in den Kunststoff eingebettete Barriereschicht aufweist, besonders effizient durchführen.

Besonders vorteilhaft ist dabei, wenn zumindest ein Teilwerkzeug eine Aufnahme für ein zu umspritzendes Einlegeteil (insbesondere den weiter oben erläuterten Vorformling aus Mehrschicht-Barrierefolie) aufweist, wobei insbesondere die Geometrie der Aufnahme großflächig der Geometrie des Einlegeteils entsprechen kann, so dass das Einlegeteil während mindestens eines Spritzgießschrittes großflächig durch die Aufnahme unterstützt wird. Diese Möglichkeit steht im unmittelbaren Zusammenhang mit dem mehrstufigen Spritzgießprozess, welcher ermöglicht, dass eine Seite des Einlegeteils großflächig unterstützt wird, und zwar jene Seite, an der in dem betreffenden Spritzgießschritt kein Kunststoff aufgebracht wird. Auf diese Weise ist selbst bei hochdynamischen Spritzgießvorgängen mit hochviskoser Schmelze die Gefahr einer Beschädigung des Einlegeteils sehr gering. Dies ist wiederum im Hinblick auf die eingangs dargelegte Aufgabenstellung (Minimierung der Dicke einer Barriereschicht) ein besonders wesentlicher Aspekt.

Gemäß einer anderen bevorzugten Weiterbildung weist die Wendeeinheit einen das dritte Teilwerkzeug umgebenden Rahmen auf. Dies ist im Hinblick auf die Steifigkeit der Wendeeinheit ausgesprochen vorteilhaft. Je nach den Anforderungen an die Formsteifigkeit und/oder die drehbare Lagerung des dritten Teilwerkzeugs kann dabei der Rahmen ganz oder teilweise gefüllt sein, wobei allerdings im Hinblick auf die weiter oben erläuterte Zugänglichkeit der in dem dritten Teilwerkzeug angeordneten Hohlräume von beiden Seiten her eine mögliche Füllung des Rahmens in geometrischer Zuordnung zu den einzelnen Spritzgießstationen Durchbrüche aufweist.

Die vorliegende Erfindung lässt sich gleichermaßen anwenden für Spritzgießmaschinen mit - relativ zum Maschinenbett - feststehender Wendeeinheit als auch bei solchen Spritzgießmaschinen, die über eine feststehende und eine bewegbare Formaufspannplatte verfügen, wobei in diesen, einer besonders bevorzugten Weiterbildung der vorliegenden Erfindung entsprechenden Fall auch die Wendeeinheit verfahrbar ausgeführt ist. Besonders bevorzugt wird dabei das Gewicht der Wendeeinheit über geeignete Linearführungen unmittelbar in das Gestell der Spritzgießmaschine (Maschinenbett) abgeleitet. Alternativ oder additiv kann die Wendeeinheit an Holmen der Spritzgießmaschine geführt sein.

Mit der vorstehend erläuterten erfindungsgemäßen Spritzgießmaschine lässt sich das nachstehend erläuterte Verfahren zum Herstellen eines Kunststoff-Formteils besonders zuverlässig durchführen. Im funktionalen synergetischen Zusammenwirken mit den übrigen für dieses charakteristischen Merkmalen zeichnet sich das besagte Verfahren insbesondere dadurch aus, dass eine Barriereschicht, die in den Kunststoff eingebettet Teil des herzustellenden Kunststoff-Formteils werden soll, zunächst - aufgrund beiderseitiger Beschichtung mit Kunststoffmaterial - Teil eines dreidimensionalen, aus einem Mehrschicht-Barrierefolienzuschnitt hervorgegangenen Vorformlings ist, welcher unter Anwendung eines mehrstufigen Spritzgießprozesses umspritzt wird. Während des jeweiligen Spritzgießschrittes verbindet sich die in das Werkzeug eingespritzte Kunststoffschmelze mit dem - durch deren Wärme - aufgeschmolzenen bzw. angeschmolzenen Beschichtungsmaterial des Barrierefolienzuschnitts, was im Ergebnis zu einer besonders festen und dauerhaft zuverlässigen Verankerung der Barriereschicht in dem gespritzten Kunststoff-Formteil führt. Auch mit äußerst dünnen Barriereschichten (der Mehrschicht-Barrierefolie) arbeitet das Verfahren dabei prozessstabil. Denn die Barriereschicht wird einerseits durch das jeweilige Kunststoff-Beschichtungsmaterial gestützt und geschützt, so dass sie den starken Beanspruchungen innerhalb der Spritzgießform während des Spritzgießprozesses standhält; und zum anderen kann, wie dies weiter an anderer Stelle in größerem Detail erläutert wird, eine großflächige Abstützung des Vorformlings in der Spritzgießform erfolgen, und zwar auf jener Seite, die der Seite gegenüberliegt, an welche in dem betreffenden Spritzgießschritt Kunststoffmaterial angespritzt wird. Als weiterer bedeutender Vorteil ist zu nennen, dass sich ein äußerst einfaches und zuverlässiges Handling der zu verarbeitenden Barriereschicht ergibt, weil diese zum Zeitpunkt des Einlegens in die Spritzgießform Teil eines - idealer Weise eigensteifen - dreidimensionalen Vorformlings aus einem Barrierefolienzuschnitt ist. Bei typischen Anwendungen liegen sowohl hinsichtlich der Verfahrensführung (s.o.) als auch hinsichtlich der Eigenschaften des Endprodukts sehr günstige Verhältnisse vor, wenn die Dicke der beiden Kunststoffbeschichtungen der Barriereschicht jeweils zwischen dem 10-fachen und dem 100-fachen der Dicke der Barriereschicht des Barrierefolienzuschnitts (vor dessen Umformung) beträgt.

Weitere Vorteile und günstige Gesichtspunkte werden aus der weiteren Erläuterung ersichtlich, insbesondere der verschiedenen nachstehend dargelegten bevorzugten Ausführungsbeispiele.

In diesem Sinne zeichnet sich eine erste besonders bevorzugte Ausgestaltung dadurch aus, dass der Vorformling durch Thermoformen eines ebenen Zuschnitts einer Mehrschicht-Barrierefolie geformt wird. Der besagte Zuschnitt kann dabei insbesondere aus dem besagten Mehrschicht-Barrierefolie gestanzt werden, wobei - je nach den spezifischen Besonderheiten (z.B. den verwendeten Materialien sowie deren Stärke) - auch andere Verfahren (z.B. Laserschneiden oder Ultraschallstanzen) zur Anwendung kommen können. Durch das besagte Thermoformen lassen sich beispielsweise mehr oder weniger napfartige Vorformlinge herstellen, wie sie im Rahmen der Herstellung von Behältern, welche z.B. der Aufnahme von Lebensmittel dienen, eingesetzt werden können.

Besonders bevorzugt werden dabei jene Kanten des Vorformlings, welche aus den Schnittkanten des Zuschnitts aus Mehrschicht-Barrierefolie hervorgegangen sind, umspritzt. Auf diese Weise ist die Barriereschicht im Kunststoff-Formteil vollständig gekapselt. Sie ist nicht direkt irgend welchen Umgebungseinflüssen ausgesetzt und mechanisch geschützt. Auf diese Weise erfüllt auch eine besonders dünne Barriereschicht lang anhaltend ihre Funktion. In Anwendung des beschriebenen Verfahrens lässt sich somit mit Erfolg ein Barrierematerial einsetzen, welches erheblich dünner und somit kostengünstiger ist als Barrierematerial, welches im Rahmen der Herstellung von Kunststoff-Formteilen in Anwendung herkömmlicher Spritzgießverfahren zum Einsatz kommt. So lässt sich beispielsweise eine nur 5 bis 10 *µ*m starke Folie aus EVOH einsetzen, wenn eine zum besagten dreidimensionalen Vorformling geformte PP/EVOH/PP-Dreischichtbarrierefolie zum Einsatz kommt.

Gemäß einer anderen bevorzugten Ausgestaltung ist vorgesehen, dass das Beschichtungsmaterial und das Spritzgießmaterial übereinstimmen bzw. aus der gleichen Materialfamilie stammen. Dies begünstigt die dauerhaft feste und langlebige stoffliche Verbindung des Beschichtungsmaterials und des Spritzgießmaterials durch Verschmelzen mit dem Ergebnis eines besonders langlebigen Kunststoff-Formteils.

Bei geeigneter Verfahrensführung kann die - insbesondere durch Thermoformen - zum dreidimensionalen Vorformling geformte Mehrschicht-Barrierefolie im Spritzgießprozess im Sinne einer erweiterten Funktionalität weiter veredelt werden, beispielsweise versehen werden mit Energierichtungsgebern für das Ultraschallschweißen oder mit Scharnieren oder mit Dichtungen oder ähnlichem.

Im Folgenden wird die vorliegende Erfindung anhand eines in der Zeichnung veranschaulichten besonders bevorzugten Ausführungsbeispiels näher erläutert. Dabei zeigt
- Fig. 1: ausschnittsweise einen Axialschnitt durch eine erfindungsgemäß ausgeführte Spritzgießmaschine bei geöffnetem Werkzeug und
- Fig. 2: die Spritzgießmaschine nach Fig. 1 (mit minimalen, hier nicht erheblichen Modifikationen) bei geschlossenem Werkzeug.

Die in der Zeichnung im Umfang eines hier allein interessierenden Ausschnitts veranschaulichte Spritzgießmaschine entspricht, soweit sich aus der vorliegenden Beschreibung nichts anderes ergibt, dem hinlänglich bekannten Stand der Technik; sie weist insbesondere eine erste, feststehende Formaufspannplatte 1 und eine längs der Maschinenachse 2 verfahrbare zweite Formaufspannplatte 3 auf, wobei sich letztere über Linearführungen 4 auf dem Maschinengestell (Maschinenbett) 5 abstützt. Zwischen den beiden Formaufspannplatten erstrecken sich Holme 6. Nicht veranschaulicht sind die Schließeinheit und die beiden Spritzeinheiten, von denen eine der ersten Formaufspannplatte 1 und die andere der zweiten Formaufspannplatte 3 zugeordnet ist. Auf der ersten Formaufspannplatte 1 ist ein erstes Teilwerkzeug 7 und auf der zweiten Formaufspannplatte 3 ist ein zweites Teilwerkzeug 8 aufgespannt. Diesen grundsätzlichen Aufbau der Spritzgießmaschine an dieser Stelle im Detail zu erläutern erscheint entbehrlich; stattdessen wird insoweit auf den allgemein bekannten Stand der Technik verwiesen.

Zwischen den beiden Formaufspannplatten 1 und 3 ist eine Wendeeinheit 9 angeordnet. Diese umfasst eine Grundstruktur 10 mit einem Rahmen 11 und einer diesen aussteifenden Füllung 12, wobei sich die Grundstruktur über eine Linearführung 13 verfahrbar auf dem Maschinengestell 5 abstützt. Eine zusätzliche Führung der Grundstruktur 10 an den Holmen 6 ist bedarfsweise vorgesehen.

An der Grundstruktur 10 ist ein drittes Teilwerkzeug 14 um die zur Maschinenachse 2 parallele Drehachse 15 drehbar gelagert. Das dritte Teilwerkzeug 14 umfasst einen scheibenartigen Drehkörper 16 und in diesem aufgenommene Formeinsätze 17. Die beiden Formeinsätze stimmen dabei hinsichtlich der Formgebung ihrer den jeweiligen Hohlraum 18 definierenden Oberflächen 19 identisch überein.

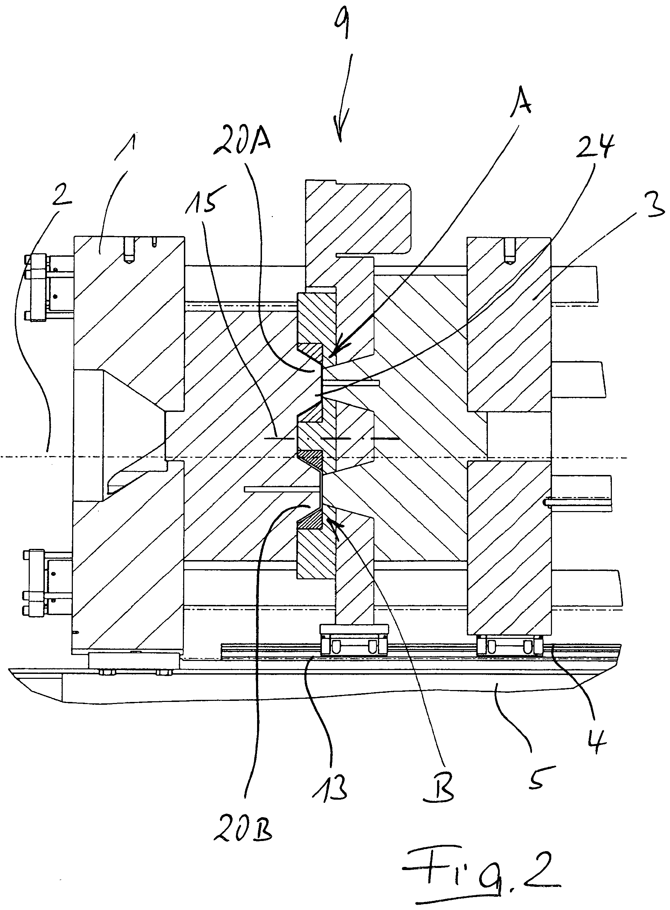

Bei geschlossenem Werkzeug (Fig. 2) begrenzen die Hohlräume 18 zusammen mit dem ersten Teilwerkzeug 7 und dem zweiten Teilwerkzeug 8 zwei Kavitäten. Diese sind durch unterschiedliche Formgebung der Vorsprünge 20 des ersten Teilwerkzeugs 7 unterschiedlich gestaltet. So ist der obere Vorsprung 20A, der der oberen Spritzgießstation A zugeordnet ist, etwas stärker ausgeführt als der der unteren Spritzgießstation B zugeordnete Vorsprung 20B. Hierdurch wird ein in die Kavität der oberen Spritzgießstation A, in welcher der erste Spritzgießschritt des weiter oben erläuterten Verfahrens abläuft, eingelegter dreidimensionaler Vorformling großflächig durch den Vorsprung 20A, welcher an die Innen-Geometrie des napfartig vorgeformten Vorformlings angepasst ist, unterstützt, während durch das zweite Teilwerkzeug 8 hindurch Kunststoffschmelze in die Kavität eingespritzt wird, um außen auf den Vorformling Kunststoff aufzutragen. Auf diese Weise bildet der Vorsprung 20A des ersten Teilwerkzeugs 7 eine "Aufnahme" 24 in dem weiter obendargelegten Sinn.

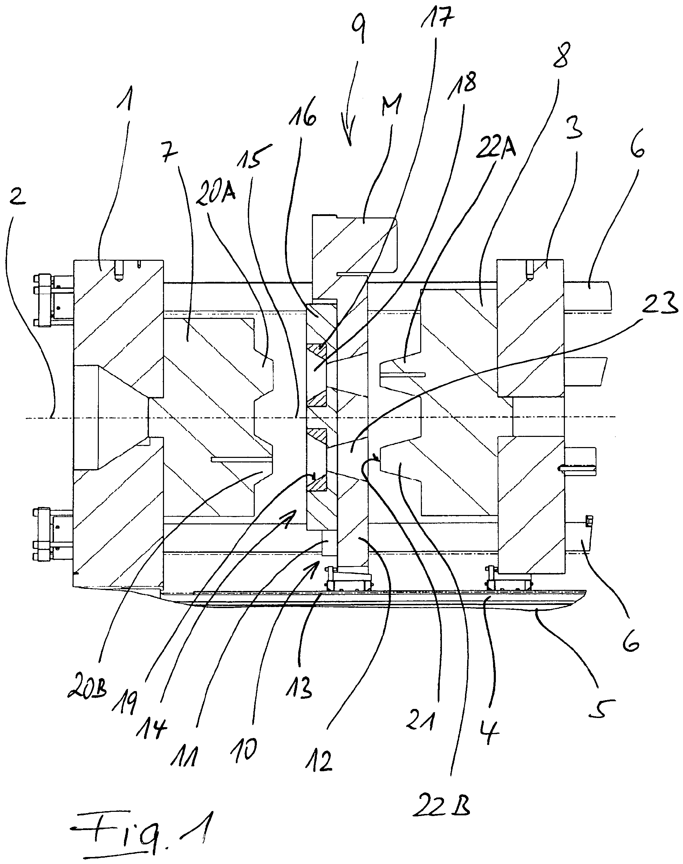

Nach dem Erstarren der eingespritzten Schmelze wird das Werkzeug geöffnet (Fig. 1), und das dritte Teilwerkzeug 14 wird um 180° gedreht, wobei der in der Spritzstation A hergestellte Spritzling in dem betreffenden Formeinsatz verbleibt und hierdurch in die Spritzstation B gelangt. Nach dem Schließen des Werkzeugs (Fig. 2) wird Kunststoffschmelze durch das erste Teilwerkzeug 7 hindurch in die Kavität der unteren Spritzstation B eingespritzt, um auf den in der Spritzstation A hergestellten Spritzling innen Kunststoff aufzutragen. Dabei wird der betreffende Spritzling außen großflächig unterstützt, und zwar durch die Oberfläche 19 des betreffenden Hohlraums 18 des dritten Teilwerkzeugs 14 sowie die Stirnseite 21 des der zweiten, unteren Spritzstation B zugeordneten unteren Vorsprungs 22B des zweiten Teilwerkzeugs 8.

Für die Beschickbarkeit der Hohlräume 18 des dritten Teilwerkzeugs 14 - je nach der aktuellen Position in der ersten Spritzstation A oder der zweiten Spritzstation B - durch das zweite Teilwerkzeug 8 oder aber das erste Teilwerkzeug 7 hindurch weist die Füllung 12 der Grundstruktur 10 der Wendeeinheit 9 - den Spritzstationen räumlich zugeordnete - Durchbrüche 23 auf. Entsprechendes gilt für den Drehkörper 16.

Vorsorglich wird, um Missverständnisse zu vermeiden, nochmals darauf hingewiesen, dass die in den Fig. 1 und 2 veranschaulichten erfindungsgemäßen Spritzgießmaschinen zwar grundsätzlich übereinstimmend aufgebaut sind, sich indessen in konstruktiven Details unterscheiden, beispielsweise hinsichtlich der Anordnung der Drehachse 15, der Ausführung der Abstützung der Wendeeinheit 9 und der verfahrbaren Formaufspannplatte 3 sowie des Rahmens 11 des Grundkörpers 10 der Wendeeinheit 9, und dergleichen.

## Patentansprüche

1. Spritzgießmaschine mit zwei relativ zueinander bewegbaren Formaufspannplatten (1, 3), einer Schließeinheit, einer zwischen den Formaufspannplatten angeordneten Wendeeinheit (9) und mindestens zwei Spritzeinheiten, wobei die beiden Formaufspannplatten ein erstes und ein zweites Teilwerkzeug (7; 8) tragen und die Wendeeinheit ein drittes Teilwerkzeug (14) umfasst, welches um eine parallel zur Schließachse (2) orientierte Drehachse (15) drehbar ist und um die Drehachse herum angeordnet mehrere übereinstimmend ausgeführte Hohlräume (18) umfasst, welche bei geschlossenem Werkzeug zusammen mit dem ersten und dem zweiten Teilwerkzeug (7; 8) unterschiedlich gestaltete Kavitäten begrenzen, wobei die Hohlräume des dritten Teilwerkzeugs (14) jeweils in einer Stellung (A) des dritten Teilwerkzeugs durch das erste Teilwerkzeug (7) hindurch von einer der betreffenden ersten Formaufspannplatte (1) zugeordneten Spritzeinheit und in einer anderen Stellung (B) des dritten Teilwerkzeugs (14) durch das zweite Teilwerkzeug (8) hindurch von einer der betreffenden zweiten Formaufspannplatte (3) zugeordneten Spritzeinheit beschickbar sind.

2. Spritzgießmaschine nach Anspruch 1, **dadurch gekennzeichnet, dass** ein Teilwerkzeug (7, 8, 14) eine Aufnahme für ein zu umspritzendes Einlegeteil aufweist.

3. Spritzgießmaschine nach Anspruch 1 oder Anspruch 2, **dadurch gekennzeichnet, dass** die Geometrie der Aufnahme großflächig der Geometrie des Einlegeteils entspricht, so dass das Einlegeteil großflächig durch die Aufnahme unterstützt wird.

4. Spritzgießmaschine nach einem der Ansprüche 1 bis 3, **dadurch gekennzeichnet, dass** die Wendeeinheit (9) einen das dritte Teilwerkzeug (14) umgebenden Rahmen aufweist.

5. Spritzgießmaschine nach einem der Ansprüche 1 bis 4, **dadurch gekennzeichnet, dass** eine der Formaufspannplatten (1, 3) feststehend und die Wendeinheit (9) längs der Schließachse (2) verfahrbar ausgeführt ist.

6. Spritzgießmaschine nach einem der Ansprüche 1 bis 5, **dadurch gekennzeichnet, dass** sich die Wendeeinheit (9) über Linearführungen (13) auf dem Gestell (5) der Spritzgießmaschine abstützt.

7. Spritzgießmaschine nach einem der Ansprüche 1 bis 6, **dadurch gekennzeichnet, dass** die Wendeeinheit (9) an Holmen (6) der Spritzgießmaschine geführt ist.

## Claims

1. An injection moulding machine comprising two die platens (1, 3) that can be moved relative to one another, a clamping unit, a turning unit (9) arranged between the die platens and at least two injection units, wherein the two die platens carry a first and a second partial mould (7; 8) and the turning unit comprises a third partial mould (14), which is rotatable about a rotational axis (15) oriented parallel to the clamping axis (2) and comprises several consistently designed cavities (18) arranged around the rotational axis, wherein said cavities define differently designed mould cavities together with the first and the second partial mould (7; 8) when the mould is closed, and wherein the cavities of the third partial mould (14) can be respectively filled by an injection unit assigned to the corresponding first die platen (1) through the first partial mould (7) in one position (A) of the third partial mould and filled by an injection unit assigned to the corresponding second die platen (3) through the second partial mould (8) in another position (B) of the third partial mould (14).

2. The injection moulding machine according to claim 1, **characterized in that** one partial mould (7, 8, 14) features a receptacle for an insert to be encased by means of injection moulding.

3. The injection moulding machine according to claim 1 or claim 2, **characterized in that** the geometry of the receptacle extensively corresponds to the geometry of the insert such that the insert is extensively supported by the receptacle.

4. The injection moulding machine according to one of claims 1-3, **characterized in that** the turning unit (9) features a frame surrounding the third partial mould (14).

5. The injection moulding machine according to one of claims 1-4, **characterized in that** one of the die platens (1, 3) is realized stationary and the turning unit (9) is realized displaceable along the clamping axis (2).

6. The injection moulding machine according to one of claims 1-5, **characterized in that** the turning unit (9) is supported on the frame (5) of the injection moulding machine by means of linear guides (13).

7. The injection moulding machine according to one of claims 1-6, **characterized in that** the turning unit (9) is guided on rails (6) of the injection moulding machine.

## Revendications

1. Machine à mouler par injection avec deux plaques de serrage porte-moule pouvant bouger l'une par rapport à l'autre (1, 3), une unité de fermeture, une unité pivotante (9) disposée entre les plaques de serrage porte-moule et au moins deux unités d'injection, les deux plaques de serrage porte-moule portant une première et une deuxième partie d'outil (7 ; 8) et l'unité pivotante comprenant une troisième partie d'outil (14), laquelle peut tourner autour d'un axe de rotation (15) orienté parallèlement à l'axe de fermeture (2) et comprend plusieurs cavités (18) exécutées de manière concordante disposées autour de l'axe de rotation, lesquelles, lorsque l'outil est fermé, délimitent ensemble avec la première et la deuxième partie d'outil (7 ; 8) des cavités de structure différente, les cavités de la troisième partie d'outil (14) pouvant être respectivement remplies dans une position (A) de la troisième partie d'outil à travers la première partie d'outil (7) par une unité d'injection attribuée à la première plaque de serrage porte-moule (1) correspondante et dans une autre position (B) de la troisième partie d'outil (14) à travers la deuxième partie d'outil (8) par une unité d'injection attribuée à la deuxième plaque de serrage porte-moule (3) correspondante.

2. Machine à mouler par injection selon la revendication 1, **caractérisée en ce qu'**une partie d'outil (7, 8, 14) comporte un logement pour une pièce d'insertion à enrober par injection.

3. Machine à mouler par injection selon la revendication 1 ou la revendication 2, **caractérisée en ce que** la géométrie du logement correspond pour la majorité de la surface à la géométrie de la pièce d'insertion de telle manière que la pièce d'insertion est soutenue sur la majorité de la surface par le logement.

4. Machine à mouler par injection selon l'une quelconque des revendications 1 à 3, **caractérisée en ce que** l'unité pivotante (9) comporte un cadre entourant la troisième partie d'outil (14).

5. Machine à mouler par injection selon l'une quelconque des revendications 1 à 4, **caractérisée en ce qu'**une des plaques de serrage porte-moule (1, 3) est exécutée de manière fixe et l'unité pivotante (9) est exécutée pouvant se déplacer le long de l'axe de fermeture (2).

6. Machine à mouler par injection selon l'une quelconque des revendications 1 à 5, **caractérisée en ce que** l'unité pivotante (9) s'appuie sur des guidages linéaires (13) situés sur le châssis (5) de la machine à mouler par injection.

7. Machine à mouler par injection selon l'une quelconque des revendications 1 à 6, **caractérisée en ce que** l'unité pivotante (9) est guidée sur des longerons (6) de la machine à mouler par injection.
